# EUROPEAN PATENT SPECIFICATION

(11) **EP 4 037 347 B1**
(45) Date of publication and mention of the grant of the patent: **10.01.2024**
(21) Application number: 22163477.7
(22) Date of filing: 22.03.2022
(51) Int. Cl.: H04L 9/40, H04W 4/021, H04W 4/44, H04W 4/46, H04W 12/63

(54) **COMMUNICATION METHODS AND APPARATUSES FOR VEHICLE, AND ELECTRONIC DEVICE**
KOMMUNIKATIONSVERFAHREN UND -VORRICHTUNGEN FÜR EIN FAHRZEUG UND ELEKTRONISCHE VORRICHTUNG
PROCÉDÉS ET APPAREILS DE COMMUNICATION POUR VÉHICULE ET DISPOSITIF ÉLECTRONIQUE

(30) Priority: 14.05.2021 CN 202110528180
(43) Date of publication of application: 03.08.2022
(73) Proprietor: Apollo Intelligent Connectivity (Beijing) Technology Co., Ltd., Beijing 100176 (CN)
(72) Inventor: ZHU, Shuanghe, Beijing, 100176 (CN); CAO, Liang, Beijing, 100176 (CN); SHI, Zhenzhen, Beijing, 100176 (CN)
(74) Representative: Studio Torta S.p.A.

(56) References cited:
- US-A1- 2020 351 616
- MINISTRY OF ECONOMIC AFFAIRS: "Proposed text changes to clause 5.1 of TS 102 940 v2.0.4 in remote consensus", ETSI DRAFT; ITSWG5(21)000034, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. WG ITS WG5 Security 20 April 2021 (2021-04-20), pages 1-45, XP014414729, Retrieved from the Internet: URL:ftp://docbox.etsi.org/ITS/ITSWG5/05-CO NTRIBUTIONS/2021/ITSWG5(21)000034_Proposed _text_changes_to_clause_5_1_of_TS_102_940_ v2_0_4_in_.docx [retrieved on 2021-04-20]

## Description

### TECHNICAL FIELD

The present disclosure relates to the field of communication technology, in particular, to a communication method and apparatus for a vehicle and an electronic device, which can be specifically used in the field of artificial intelligence technology such as vehicle to X, automatic driving and intelligent transportation.

### BACKGROUND

With the development of vehicle to X (V2X) technology, traffic participants such as vehicles, road infrastructure and pedestrians are connected with each other, forming a new application scenario of interconnection.

At present, a number of intelligent transportation cities supporting V2X technology have emerged. Each intelligent transportation city has its own mutual trust platform. V2X devices in the intelligent transportation city can communicate based on a trusted root certificate list corresponding to the mutual trust platform.

However, since the trusted root certificate lists corresponding to different mutual trust platforms work independently, when in an area corresponding to other mutual trust platforms, they cannot communicate with V2X devices in the area.

US 2020/0351616 A1 discloses a method at a network element within a Vehicle to Everything (V2X) Communications Domain for vehicle location tracking using V2X communication.

The document of the European Telecommunications Standards Institute, entitled *"Proposed text changes to clause 5.1 of TS 102 940 v2.0.4 in remote consensus",* discloses ITS communications security architecture, ITS station security management, and ITS security management system.

### SUMMARY

The invention is set out in the appended set of claims. The present disclosure provides methods and apparatuses for performing communication between the vehicle and a communication device in an area when the vehicle travels to the area corresponding to other mutual trust platforms.

### BRIEF DESCRIPTION OF DRAWINGS

The accompanying drawings are used to better understand the solution and do not constitute a limitation of the present disclosure. Of which:
FIG. 1 is a schematic architecture diagram of a communication system provided by an embodiment of the present disclosure;
FIG. 2 is a schematic flowchart of a communication method for a vehicle according to a first embodiment of the present disclosure;
FIG. 3 is a schematic flowchart of a method for acquiring a corresponding relationship between mutual trust platforms and areas, and download addresses corresponding to the mutual trust platforms according to a second embodiment of the present disclosure;
FIG. 4 is a schematic flowchart of a communication method for a vehicle according to a third embodiment of the present disclosure;
FIG. 5 is a schematic flowchart of a communication method for a vehicle according to a fourth embodiment of the present disclosure;
FIG. 6 is a schematic flowchart of a communication method for a vehicle according to a fifth embodiment of the present disclosure;
FIG. 7 is a schematic block diagram of a communication apparatus for a vehicle according to a sixth embodiment of the present disclosure;
FIG. 8 is a schematic block diagram of a communication apparatus for a vehicle according to a seventh embodiment of the present disclosure;
FIG. 9 is a schematic block diagram of a communication apparatus for a vehicle according to an eighth embodiment of the present disclosure; and
FIG. 10 is a schematic block diagram of an electronic device according to a ninth embodiment of the present disclosure.

### DESCRIPTION OF EMBODIMENTS

The exemplary embodiments of the present disclosure are described below in conjunction with accompanying drawings, including various details of the embodiments of the present disclosure to facilitate understanding, which should be considered only exemplary. Therefore, those skilled in the art should recognize that various changes and modifications can be made to the embodiments described herein without departing from the scope of the present invention if said changes and modifications are within the scope of the appended claims.

In the embodiments of the present disclosure, "at least one" refers to one or more, and "multiple" refers to two or more. "And/or" describes an association relationship of associated objects, indicating that there may be three types of relationships, for example, A and/or B, which can mean that there are three cases: A exists alone, A and B exist at the same time, and B exists alone, in which A and B can be singular or plural. In the text description of the present disclosure, the character "j" generally indicates that front and rear associated objects are in an "or" relationship.

The technical solution provided by the embodiments of the present disclosure may be applied in a scenario of V2X device communication. At present, a number of intelligent transportation cities supporting V2X technology have emerged. Each intelligent transportation city has its own mutual trust platform. V2X devices in the intelligent transportation city can communicate based on a trusted root certificate list corresponding to the mutual trust platform.

Taking an intelligent transportation city A and an intelligent transportation city B as an example, both the intelligent transportation city A and the intelligent transportation city B have their own mutual trust platforms, namely a mutual trust platform A and a mutual trust platform B. V2X devices in the intelligent transportation city A can communicate based on a trusted root certificate list corresponding to the mutual trust platform A; similarly, V2X devices in the intelligent transportation city B can communicate based on a trusted root certificate list corresponding to the mutual trust platform B. However, because the trusted root certificate lists of the intelligent transportation city A and the intelligent transportation city B are both independent and cannot communicate with each other, when V2X vehicles in the intelligent transportation city A travel to the intelligent transportation city B, they cannot communicate with V2X devices in the intelligent transportation city B.

The mutual trust platform may be a network device or a cloud server, etc., which can be used to manage relevant information of a local certificate system and a certificate of an external certificate system in an intelligent transportation area. For example, an example is taken where a city is an intelligent transportation area, a mutual trust platform corresponding to the city may maintain a trusted root certificate list, the trusted root certificate list includes a root certificate of the local certificate system and a download address of a trusted domain certificate list.

In order to enable the V2X vehicles in the intelligent transportation city A to communicate with the V2X devices in the intelligent transportation city B when travelling to intelligent transportation city B, it can be considered to acquire the trusted root certificate list corresponding to the mutual trust platform B, so that the V2X vehicles in the intelligent transportation city A can communicate with the V2X devices in the intelligent transportation city B based on the trusted root certificate list corresponding to the mutual trust platform B. However, how to acquire the trusted root certificate list of the intelligent transportation city B for the V2X vehicles in the intelligent transportation city A is an urgent problem to be solved.

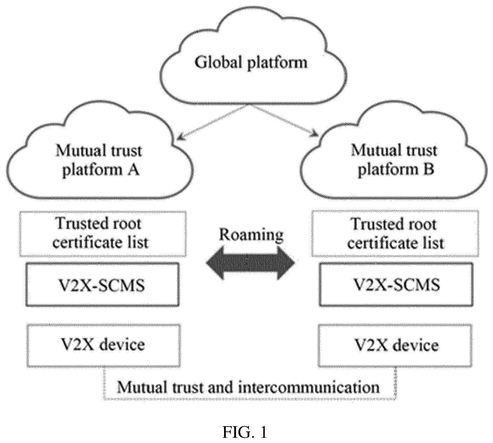

In order to enable the V2X vehicles in the intelligent transportation city A to acquire the trusted root certificate list corresponding to the mutual trust platform B, it can be considered to set a higher-level global authority for managing the mutual trust platform A corresponding to the intelligent transportation city A and the mutual trust platform B corresponding to the intelligent transportation city B, such as a global platform. Exemplarily, as shown in FIG. 1, FIG. 1 is a schematic architecture diagram of a communication system provided by an embodiment of the present disclosure. The communication system shown in FIG. 1 may include the mutual trust platform A, the mutual trust platform B and a global platform, where the trusted root certificate list corresponding to the mutual trust platform A is different from the trusted root certificate list corresponding to the mutual trust platform B. The global platform in FIG. 1 can be used to maintain a corresponding relationship between trusted mutual trust platforms and areas, and download addresses of the trusted root certificate lists corresponding to the mutual trust platforms. Exemplarily, the maintained content can be recorded in a file of the mutual trust platform list, and the V2X vehicles in the intelligent transportation city A can regularly acquire the mutual trust platform list from the global platform, so that when the V2X vehicles in the intelligent transportation city A travels to an area of the intelligent transportation city B, the download address of the trusted root certificate list corresponding to the mutual trust platform B can be determined through a pre-acquired mutual trust platform list, and the trusted root certificate list can be downloaded and acquired based on the download address of the trusted root certificate list, so that the V2X vehicles in the intelligent transportation city A can communicate with the V2X devices in the intelligent transportation city B based on the trusted root certificate list, thereby realizing communication between the V2X vehicles in the intelligent transportation city A and the V2X devices in the intelligent transportation city B.

Based on the above technical concept, the embodiments of the present disclosure provide a communication method for a vehicle. Next, the communication method for a vehicle provided by the present disclosure will be described in detail through specific embodiments. It can be understood that the following specific embodiments may be combined with each other, and the same or similar concepts or processes may not be repeated in some embodiments.

### Embodiment 1

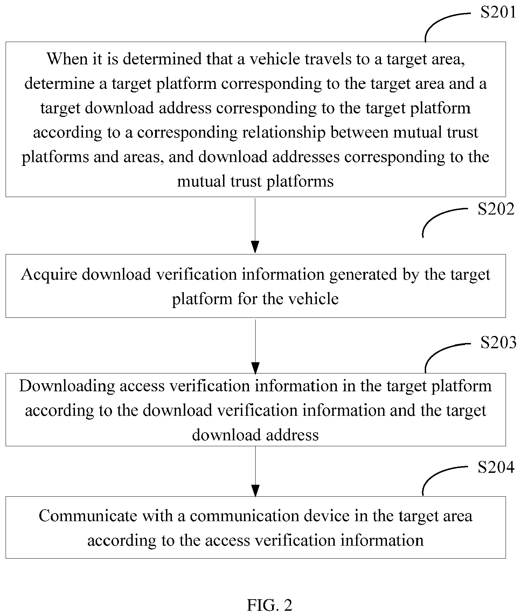

FIG. 2 is a schematic flowchart of a communication method for a vehicle according to a first embodiment of the present disclosure. The communication method for the vehicle may be executed by a software and/or a hardware apparatus, and the hardware apparatus may be a vehicle. Exemplarily, as shown in FIG. 2, the communication method for the vehicle may include the following steps.

S201: when it is determined that the vehicle travels to a target area, determine a target platform corresponding to the target area and a target download address corresponding to the target platform according to a corresponding relationship between mutual trust platforms and areas, and download addresses corresponding to the mutual trust platforms.

A mutual trust platform corresponding to the target area and a mutual trust platform corresponding to an area to which the vehicle belongs are different mutual trust platforms, and access verification information corresponding to different mutual trust platforms is different, that is, access verification systems corresponding to different mutual trust platforms are different.

Exemplarily, the corresponding relationship between the mutual trust platforms and the areas, and the download addresses corresponding to the mutual trust platforms may be download and acquired from a global platform when the vehicle executes the technical solution of the present disclosure, or downloaded and acquired from the global platform before the vehicle executes the technical solution of the present disclosure. After acquiring the corresponding relationship between the mutual trust platforms and the areas, and the download addresses corresponding to the mutual trust platforms, the vehicle saves the corresponding relationship between the mutual trust platforms and the areas, and the download addresses corresponding to the mutual trust platforms locally, so that the vehicle can directly search and acquire the corresponding relationship between the mutual trust platforms and the areas, and the download addresses corresponding to the mutual trust platforms locally when executing the technical solution of the present disclosure.

It can be understood that in the embodiment of the present disclosure, the global platform can maintain the corresponding relationship between the mutual trust platforms and the areas, and the download addresses corresponding to the mutual trust platforms through a mutual trust platform list, correspondingly, the vehicle acquires the mutual trust platform list from the global platform; the global platform can also maintain the corresponding relationship between the mutual trust platforms and the areas, and the download addresses corresponding to the mutual trust platforms in a form of mutual trust platform list; or the corresponding relationship between the mutual trust platforms and the areas, and the download addresses corresponding to the mutual trust platforms may also be maintained in other ways, which can be specifically set according to actual needs.

Taking maintaining the corresponding relationship between the mutual trust platforms and the areas, and the download addresses corresponding to the mutual trust platforms through the mutual trust platform list as an example, in addition to the corresponding relationship between the mutual trust platforms and the areas, and the download addresses corresponding to the mutual trust platforms, the mutual trust platform list may also include a root certificate of a trusted root certificate list authority of each mutual trust platform, an registration service interface address provided by each trusted mutual trust platform for the vehicle, and a name and a code of an area managed by each mutual trust platform and so on, which can be specifically set according to the actual needs.

It can be understood that in the embodiments of the present disclosure, since information of the mutual trust platform may change, for example, the download address corresponding to the mutual trust platform may change. Therefore, the global platform may update the mutual trust platform list based on the download address corresponding to the changed mutual trust platform, and in order to ensure that the vehicle can acquire the latest mutual trust platform list, the vehicle can regularly download and acquire the mutual trust platform list from the global platform, so as to acquire the latest corresponding relationship between the mutual trust platforms and the areas, and the download addresses corresponding to the mutual trust platforms.

When it is determined that the vehicle travels to a target area, determining the target platform corresponding to the target area and the target download address corresponding to the target platform according to the corresponding relationship between mutual trust platforms and areas, and download addresses corresponding to the mutual trust platforms acquired. It can be understood that after acquiring the target download address corresponding to the target platform, the vehicle cannot download access verification information only according to the target download address corresponding to the target platform, but needs to acquire download verification information generated by the target platform for the vehicle and combine the target download address with the download verification information generated by the target platform for the vehicle, that is, the vehicle executes the following S202 and 5203.

S202: acquire download verification information generated by the target platform for the vehicle.

Exemplarily, in the embodiment of the present disclosure, the download verification information may be a security certificate which is used as a certificate for identity authentication during an interaction between the vehicle and the mutual trust platforms, and the security certificate may be used as a passage certificate of the vehicle in the target area, such as AccessToken.

Exemplarily, when the vehicle acquires the download verification information generated by the target platform for the vehicle, if the vehicle travels to the target area for a first time, it can send a registration request message to the target platform; where the registration request message includes registration verification information of the vehicle to enable the target platform to verify an identity of the vehicle based on the registration verification information; exemplarily, the registration verification information may issue an initial security certificate for the vehicle in the area to which the vehicle belongs, such as an X509 certificate. The security certificate can prove the identity of the vehicle, and the area to which the vehicle belongs can be determined according to the security certificate. The registration request message may also include identification information of the vehicle, such as a vehicle identification number (Vehicle Identification Number, VIN) or license plate information; after the verification of the identity of the vehicle is successful, the target platform generates, for the vehicle, the download verification information of the vehicle for travelling in the target area, and then sends a registration response message to the vehicle; where the registration response message includes the download verification information of the vehicle to enable the vehicle to acquire the download verification information. It can be understood that generally, the download verification information has a valid period of use. Therefore, after acquiring the download verification information, the vehicle may save the download verification information locally. If the vehicle travels to the target area again within the valid period of use, it can directly acquire the download verification information locally (from the vehicle itself) without sending the registration request message to the target platform, so there is no need to interact with the target platform, thereby improving efficiency of acquiring the download verification information.

It can be understood that in the embodiment of the present disclosure, before sending the registration request message to the target platform to request the download verification information generated by the target platform for the vehicle, the vehicle can also verify the identity of the target platform, and send the registration request message to the target platform after the verification is successful, to request the target platform to generate download verification information for the vehicle.

In this way, after acquiring the download verification information generated by the target platform for the vehicle and the target download address corresponding to the target platform respectively, the vehicle can execute the following S203.

S203: download access verification information in the target platform according to the download verification information and the target download address.

Exemplarily, the access verification information may be a trusted root certificate list, and a trusted root certificate of the trusted root certificate list can be used to establish a trust chain to verify other certificates signed by the trusted root certificate.

When the vehicle downloads the access verification information in the target platform according to the download verification information and the target download address, the target platform can first perform authentication of the identity of the vehicle based on the download verification information of the vehicle. After the authentication is passed, the vehicle can download the access verification information in the target platform according to the target download address, so as to acquire the access verification information.

S204: communicate with a communication device in the target area according to the access verification information.

After acquiring the access verification information and the download verification information generated by the target platform for the vehicle, the vehicle has the trust chain of the target area at the same time. Therefore, the vehicle can communicate with the communication device in the target area according to the access verification information, thereby realizing the communication between the vehicle and the communication device in the target area.

It can be seen that in the embodiment of the present disclosure, when it is determined that a vehicle travels to a target area, determining a target platform corresponding to the target area and a target download address corresponding to the target platform according to a corresponding relationship between mutual trust platforms and areas, and download addresses corresponding to the mutual trust platforms; acquiring download verification information generated by the target platform for the vehicle; downloading access verification information in the target platform according to the download verification information and the target download address; and communicating with a communication device in the target area according to the access verification information, thereby realizing communication between the vehicle and the communication device in the target area.

Based on the first embodiment shown in FIG. 2 above, exemplarily, in the embodiment of the present disclosure, when the vehicle sends the registration request message to the target platform to request the download verification information generated by the target platform for the vehicle through the registration request message, the response message may also include registration service interface addresses provided by the mutual trust platforms for the vehicle, so that the vehicle can first determine a registration service interface address provided by the target platform for the vehicle, and send the registration request message to the target platform based on the registration service interface address provided by the target platform for the vehicle, thereby improving a success rate of sending the registration request message.

Based on the first embodiment shown in FIG. 2 above, it can be seen that in the embodiment of the present disclosure, it is precisely because that the vehicle acquires the corresponding relationship between the mutual trust platforms and the areas, and the download addresses corresponding to the mutual trust platforms, therefore, when it is determined that the vehicle travels to the target area, the target platform corresponding to the target area and the target download address corresponding to the target platform can be determined according to the corresponding relationship between the mutual trust platforms and the areas, and the download addresses corresponding to the mutual trust platforms, thereby realizing the communication between the vehicle and the communication device in the target area. Next, through the following second embodiment, how the vehicle acquires the corresponding relationship between the mutual trust platforms and the areas, and the download addresses corresponding to the mutual trust platforms in the embodiment of the present disclosure will be described in detail.

### Embodiment 2

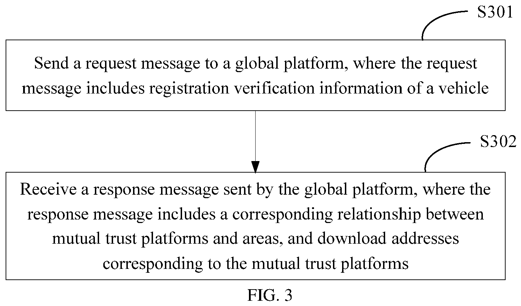

FIG. 3 is a schematic flowchart of a method for acquiring a corresponding relationship between mutual trust platforms and areas, and download addresses corresponding to the mutual trust platforms according to a second embodiment of the present disclosure. The method can also be executed by a software and/or a hardware apparatus, which may be a vehicle. As shown in FIG. 3, the method for acquiring the corresponding relationship between the mutual trust platforms and the areas, and the download addresses corresponding to the mutual trust platforms may include the following steps.

S301: send a request message to a global platform, where the request message includes registration verification information of the vehicle.

Exemplarily, the global platform can be seen in FIG. 1. Assuming that the global platform maintains the corresponding relationship between the mutual trust platforms and the areas, and the download addresses corresponding to the mutual trust platforms in the form of mutual trust platform list, the vehicle can send the request message to the global platform to acquire the mutual trust platform list from the global platform through the request message.

Exemplarily, in the embodiment of the present disclosure, each trusted mutual trust platform can report to the global platform the corresponding relationship between their mutual trust platform and a managed area, and a download address of access verification information corresponding to each mutual trust platform; after receiving the respective corresponding relationship reported by each mutual trust platform and the download address of the access verification information corresponding to each mutual trust platform, the global platform can build and save the mutual trust platform list based on the respective corresponding relationship and the download address of the access verification information corresponding to each mutual trust platform.

It should be noted that in the embodiment of the present disclosure, if each trusted mutual trust platform, in addition to reporting their respective corresponding relationship and the download address of the access verification information corresponding to each mutual trust platform, also reports to the global platform root verification information of their respective access verification information, a registration service interface address provided by each trusted mutual trust platform for the vehicle, and a name and a code of an area managed by each mutual trust platform. Correspondingly, the mutual trust platform list maintained in the global platform may also include the root verification information of the access verification information of each mutual trust platform, and the registration service interface address provided by each trusted mutual trust platform for the vehicle, and the name and code of the area managed by each mutual trust platform, which can be specifically set according to actual needs.

After the vehicle sends the request message including the registration verification information to the global platform, the global platform can verify an identity of the vehicle based on the registration verification information to determine whether the vehicle is a vehicle in a trustable area; if yes, the global platform sends a response message including a corresponding relationship between mutual trust platforms and areas, and download addresses corresponding to the mutual trust platforms to the vehicle. Correspondingly, the vehicle receives the response message sent by the global platform, that is, the vehicle executes the following S302.

S302: receive a response message sent by the global platform, where the response message includes the corresponding relationship between the mutual trust platforms and the areas, and the download addresses corresponding to the mutual trust platforms.

It can be seen that in the embodiment of the present disclosure, the vehicle can send the request message including the registration verification information to the global platform, and receive the corresponding relationship between the mutual trust platforms and the areas, and the download addresses corresponding to the mutual trust platforms sent by the global platform, so as to acquire the corresponding relationship between the mutual trust platforms and the areas, and the download addresses corresponding to the mutual trust platforms; in this way, the vehicle can determine a target platform corresponding to a target area and a target download address corresponding to the target platform according to the corresponding relationship between the mutual trust platforms and the areas, and the download addresses corresponding to the mutual trust platforms; and download access verification information in the target platform according to the target download address; consequently, the vehicle can communicate with a communication device in the target area according to the access verification information, thereby realizing communication between the vehicle and the communication device in the target area.

Based on the above embodiment shown in FIG. 2 or FIG. 3, exemplarily, in the embodiment of the present disclosure, when the vehicle communicates with the communication device in the target area based on the access verification information, in order to ensure the security of the access verification information, the access verification information can be verified first.

Exemplarily, in the embodiment of the present disclosure, the mutual trust platform list acquired by the vehicle may also include root verification information of the access verification information of the trusted mutual trust platform. Taking the access verification information being a trusted root certificate list as an example, the root verification information of the access verification information may be a root certificate of the trusted root certificate list, in this way, when communicating with the communication device in the target area based on the access verification information, the vehicle can acquire the root verification information of the access verification information of the target platform from the mutual trust platform list, and the access verification information can be verified based on the root verification information; after the verification is successful, the vehicle can communicate with the communication device in the target area based on the access verification information, thereby realizing the communication between the vehicle and the communication device in the target area under the premise of ensuring the security of the access verification information.

Based on the above embodiment shown in FIG. 2 or FIG. 3, exemplarily, in the embodiment of the present disclosure, when the vehicle communicates with the communication device in the target area based on the access verification information, taking the access verification information being the trusted root certificate list as an example, the trusted root certificate list may include a download address of a trusted domain certificate list corresponding to each trusted root certificate, in this way, the vehicle can first download the trusted domain certificate list corresponding to each trusted root certificate according to the download address of the trusted domain certificate list corresponding to each trusted root certificate; based on the trusted domain certificate list corresponding to each trusted root certificate, the vehicle can communicate with the communication device in the target area, thereby realizing the communication between the vehicle and the communication device in the target area.

Based on the above embodiment shown in FIG. 2 or FIG. 3, exemplarily, in the embodiment of the present disclosure, when the vehicle communicates with the communication device in the target area, in order to avoid the leakage of the vehicle's real identity information and reduce the risk of privacy disclosure relating to a location of the vehicle, the vehicle can first acquire anonymous verification information from a verification management platform corresponding to the target area based on the download verification information generated by the target platform for the vehicle, and communicate with the communication device in the target area based on the anonymous verification information. Compared with the case where the vehicle communicates with the communication device in the target area based on a real certificate, the leakage of the vehicle's real identity information can be avoided, thereby reducing the risk of privacy disclosure relating to the location of the vehicle.

Exemplarily, when the vehicle acquires the anonymous verification information from the verification management platform corresponding to the target area based on the download verification information, it can directly acquire the anonymous verification information from the verification management platform corresponding to the target area based on the download verification information; or it can also first acquire a real certificate from the verification management platform corresponding to the target area based on the download verification information, and then acquire the anonymous verification information from the verification management platform corresponding to the target area based on the real certificate, which can be specifically set according to actual needs.

Exemplarily, in addition to the download verification information generated for the vehicle, the registration response message sent by the target platform to the vehicle may also include an interface address and platform verification information of the verification management platform corresponding to the target area. The platform verification information may be a certificate chain of an authority, so that the vehicle can first verify an identity of the verification management platform corresponding to the target area based on the platform verification information of the target area; and then acquire the anonymous verification information from the verification management platform according to the interface address of the verification management platform after the verification is successful, thereby improving the accuracy of the acquired anonymous verification information.

Exemplarily, the registration response message may also include interface addresses and certificate chains of other management authorities, such as an authentication and authorization (AAA), a pseudonym certificate registration authority (PRA), an application certificate registration authority (ARA), a misbehavior authority (MA) and a certificate revocation list authority (CRLA), which can be specifically set according to actual needs.

### Embodiment 3

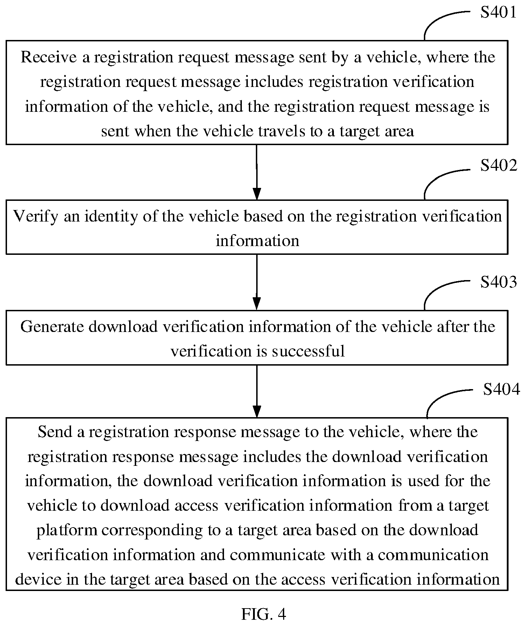

FIG. 4 is a schematic flowchart of a communication method for a vehicle according to a third embodiment of the present disclosure. The communication method for the vehicle may also be executed by a software and/or a hardware apparatus, the hardware device may be a target platform. Exemplarily, as shown in FIG. 4, the communication method for the vehicle may include the following steps.

S401: receive a registration request message sent by the vehicle, where the registration request message includes registration verification information of the vehicle, and the registration request message is sent when the vehicle travels to a target area.

Exemplarily, the registration verification information may issue an initial security certificate for an area to which the vehicle belongs, such as an X509 certificate. The security certificate can prove an identity of the vehicle, and the area to which the vehicle belongs can be determined according to the security certificate.

When the vehicle travels to the target area, because the registration verification information issued by the area to which the vehicle belongs cannot be used as its pass certificate in the target area, in order to communicate with a communication device in the target area, it is necessary to send a registration request message including the registration verification information of the vehicle to a target platform to which the target area belongs, to enable the target platform to verify the identity of the vehicle based on the registration verification information of the vehicle, that is, the following S402 is executed.

S402: verify the identity of the vehicle based on the registration verification information.

Exemplarily, when verifying the identity of the vehicle based on the registration verification information of the vehicle, if the verification of the identity of the vehicle fails, the target platform can send a registration failure response message to the vehicle; if the verification of the identity of the vehicle succeeds, after the verification is successful, the target platform generates download verification information in the target area for the vehicle, that is, executes the following S403.

S403: generate the download verification information of the vehicle after the verification is successful.

S404: send a registration response message to the vehicle, where the registration response message includes the download verification information, the download verification information is used for the vehicle to download access verification information from the target platform corresponding to the target area based on the download verification information and communicate with a communication device in the target area based on the access verification information.

It should be noted that in S404, for how the vehicle communicates with the communication device in the target area based on the download verification information and the access verification information downloaded from the target platform corresponding to the target area, reference can be made to description relating to the vehicle communicating with the communication device in the target area based on the download verification information and the access verification information downloaded from the target platform corresponding to the target area in the above embodiment shown in FIG. 2, details will not be repeated in the embodiment of the present disclosure.

It can be seen that in the embodiment of the present disclosure, a target platform receives a registration request message sent by a vehicle traveling to a target area, the registration request message including registration verification information of the vehicle, verifies an identity of the vehicle based on the registration verification information, generates download verification information of the vehicle after the verification is successful; and sends a registration response message including download verification information to the vehicle, to enable the vehicle to communicate with a communication device in the target area based on the download verification information and access verification information downloaded from the target platform corresponding to the target area, thereby realizing communication between the vehicle and the communication device in the target area.

Based on the embodiment shown in FIG. 4 above, exemplarily, the registration response message may also include, in addition to the download verification information, an interface address and platform verification information of a verification management platform corresponding to the target area, and the platform verification information may be a certificate chain of an authority. It can be understood that in the embodiment shown in FIG. 4, the target platform sends the interface address and the platform verification information of the verification management platform corresponding to the target area to the vehicle through the registration response message, the implementation principle thereof is the same as the implementation principle of the receiving of the interface address and the platform verification information of the verification management platform corresponding to the target area sent by the target platform to the vehicle through the registration response message described on a vehicle side. For details, reference can be made to the relevant description on the vehicle side, details will not be repeated in the embodiment of the present disclosure.

Based on the above embodiment shown in FIG. 4, exemplarily, in the embodiment of the present disclosure, for any mutual trust platform, it can establish and register ecological partnerships with other mutual trust platforms in advance, record relevant information of all the ecological partnerships, and configure different verification strategies for different ecological partners. Therefore, when the target platform verifies the identity of the vehicle based on the download verification information, because the target platform has pre-stored download verification information of vehicles in its trusted trust area and verification strategies corresponding to different trust areas, the target platform can first determine whether the vehicle is a vehicle in the trusted trust area in the target area based on the download verification information; if not, the target platform feeds back the registration failure response message to the vehicle; if yes, the target platform verifies the identity of the vehicle based on the verification strategy corresponding to the area to which the vehicle belongs, thereby realizing the verification of the identity of the vehicle.

### Embodiment 4

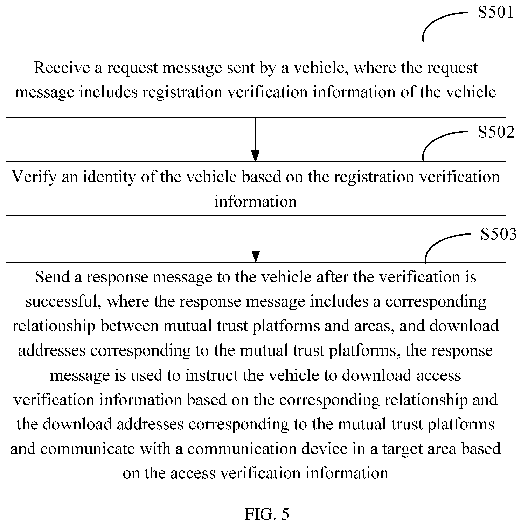

FIG. 5 is a schematic flowchart of a communication method for a vehicle according to a fourth embodiment of the present disclosure. The communication method for the vehicle may also be executed by a software and/or a hardware apparatus, and the hardware apparatus may be a global platform. Exemplarily, as shown in FIG. 5, the communication method for the vehicle may include the following steps.

S501: receive a request message sent by the vehicle, where the request message includes registration verification information of the vehicle.

Since the global platform maintains a corresponding relationship between trusted mutual trust platforms and areas, and download addresses corresponding to the mutual trust platforms, when a vehicle in an area managed by any mutual trust platform travels to an area managed by another mutual trust platform, in order to communicate with a communication device in the area managed by said mutual trust platform, it is necessary to acquire a corresponding relationship between mutual trust platforms and areas, and download addresses corresponding to the mutual trust platforms from the global platform, and download access verification information based on the download address corresponding to the mutual trust platform, so as to communicate with the communication device in the area managed by the mutual trust platform based on the access verification information.

Exemplarily, when the vehicle acquires the corresponding relationship between the mutual trust platforms and the areas, and the download addresses corresponding to the mutual trust platforms from the global platform, it can send a request message including the registration verification information of the vehicle to the global platform. Correspondingly, after receiving the request message including the registration verification information of the vehicle, the global platform may verify an identity of the vehicle based on the registration verification information of the vehicle, that is, execute the following S502.

S502: verify the identity of the vehicle based on the registration verification information.

Exemplarily, when the global platform verifies the identity of the vehicle based on the registration verification information of the vehicle, if the verification of the identity of the vehicle fails, it can send a request failure response message to the vehicle; if the verification of the identity of the vehicle succeeds, after the verification is successful, it can send the corresponding relationship between the mutual trust platforms and the areas, and the download addresses corresponding to the mutual trust platforms to the vehicle through a response message, so that the vehicle can acquire the corresponding relationship between the mutual trust platforms and the areas, and the download addresses corresponding to the mutual trust platforms, that is, the global platform executes the following S503.

S503: send a response message to the vehicle after the verification is successful, where the response message includes the corresponding relationship between the mutual trust platforms and areas, and download addresses corresponding to the mutual trust platforms, the response message is used to instruct the vehicle to download the access verification information based on the corresponding relationship and the download addresses corresponding to the mutual trust platforms and communicate with a communication device in a target area based on the access verification information.

It can be understood that in the embodiment of the present disclosure, the global platform can maintain the corresponding relationship between the mutual trust platforms and the areas, and the download addresses corresponding to the mutual trust platforms through a mutual trust platform list, correspondingly, the vehicle acquires the mutual trust platform list from the global platform; the global platform can also maintain the corresponding relationship between the mutual trust platforms and the areas, and the download addresses corresponding to the mutual trust platforms in a form of mutual trust platform list; or the corresponding relationship between the mutual trust platforms and the areas, and the download addresses corresponding to the mutual trust platforms can also be maintained in other ways, which can be specifically set according to actual needs.

Taking maintaining the corresponding relationship between the mutual trust platforms and the areas, and the download addresses corresponding to the mutual trust platforms through the mutual trust platform list as an example, in addition to the corresponding relationship between the mutual trust platforms and the areas, and the download addresses corresponding to the mutual trust platforms, the mutual trust platform list may also include the root certificate of the trusted root certificate list authority of each mutual trust platform, an registration service interface address provided by each trusted mutual trust platform for the vehicle, and a name and a code of an area managed by each mutual trust platform and so on, which can be specifically set according to actual needs.

It should be noted that in S504, for how the vehicle communicates with the communication device in the target area based on the download verification information and the access verification information downloaded from the target platform corresponding to the target area, reference can be made to description relating to the vehicle communicating with the communication device in the target area based on the download verification information and the access verification information downloaded from the target platform corresponding to the target area in the above embodiment shown in FIG. 2, details will not be repeated in the embodiment of the present disclosure.

It can be seen that in the embodiment of the present disclosure, a global platform receives a request message sent by a vehicle traveling to a target area, the request message including registration verification information of the vehicle, verifies an identity of the vehicle based on the registration verification information, and sends a corresponding relationship between mutual trust platforms and areas, and download addresses corresponding to the mutual trust platforms to the vehicle through a response message after the verification is successful, so that the vehicle can download access verification information based on the corresponding relationship and the download addresses corresponding to the mutual trust platforms, and communicate with a communication device in the target area based on the access verification information, thereby realizing communication between the vehicle and the communication device in the target area.

Based on the above embodiment shown in FIG. 5, assuming that the global platform maintains the corresponding relationship between the mutual trust platforms and the areas, and the download addresses corresponding to the mutual trust platforms in the form of mutual trust platform list, the global platform needs to build the mutual trust platform list before sending the mutual trust platform list to the vehicle through the response message. Exemplarily, when the global platform builds the mutual trust platform list, the global platform can receive a corresponding relationship between a mutual trust platform and a managed area reported by each trusted mutual trust platform, and an download address of access verification information corresponding to each mutual trust platform; and builds the mutual trust platform list according to the corresponding relationship and the download address of the access verification information corresponding to each mutual trust platform.

It should be noted that in the embodiment of the present disclosure, if each trusted mutual trust platform, in addition to reporting their respective corresponding relationship and the download address of the access verification information corresponding to each mutual trust platform, also reports root verification information of their respective access verification information, a registration service interface address provided by each trusted mutual trust platform for the vehicle, and a name and a code of an area managed by each mutual trust platform to the global platform. Correspondingly, the mutual trust platform list maintained in the global platform may also include the root verification information of the access verification information of each mutual trust platform, and the registration service interface address provided by each trusted mutual trust platform for the vehicle, and the name and the code of the area managed by each mutual trust platform, which can be specifically set according to actual needs.

It can be understood that information of a trusted mutual trust platform may change, for example, the download address corresponding to the mutual trust platform may change. Therefore, the global platform may update the mutual trust platform list based on the download address corresponding to the changed mutual trust platform, and in order to ensure that the vehicle can acquire the latest mutual trust platform list, the vehicle can regularly download and acquire the mutual trust platform list from the global platform, so as to acquire the latest corresponding relationship between the mutual trust platforms and the areas, and the download addresses corresponding to the mutual trust platforms.

### Embodiment 5

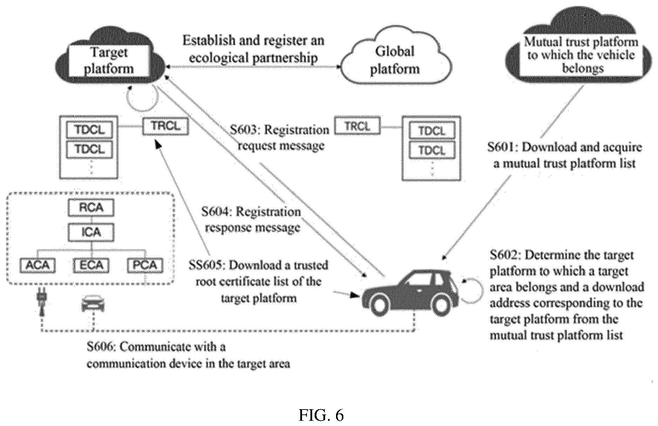

In order to describe the technical solution provided by the embodiment of the present disclosure, an example is taken where a corresponding relationship between mutual trust platforms and areas, and download addresses corresponding to the mutual trust platforms is maintained through a mutual trust platform list, download verification information is a target security certificate, and access verification information is a trusted root certificate list. FIG. 6 is a schematic flowchart of a communication method for a vehicle according to a fifth embodiment of the present disclosure. The communication method for the vehicle may also be executed by a software and/or a hardware apparatus, and the hardware apparatus may be applied to a communication system. Exemplarily, as shown in FIG. 6, the communication method for the vehicle may include the following steps.

S601: the vehicle downloads and acquires the mutual trust platform list from a global platform, where the mutual trust platform list includes the corresponding relationship between trusted mutual trust platforms and areas, and download addresses corresponding to the mutual trust platforms.

It should be noted that when implementing the technical solution of the present disclosure, it is not necessary to implement 5601 first. If the mutual trust platform list has been saved locally in the vehicle when the technical solution of the present disclosure is implemented, S602 can be executed directly to determine a target platform to which a target area belongs and the download address corresponding to the target platform from the mutual trust platform list; on the contrary, if the mutual trust platform list is not saved locally in the vehicle when the technical solution of the present disclosure is implemented, the mutual trust platform list can be downloaded and acquired from the global platform first, and then S602 can be executed, that is, the target platform to which the target area belongs and the download address corresponding to the target platform can be determined from the mutual trust platform list.

S602: when the vehicle travels to the target area, determine the target platform to which the target area belongs and the download address corresponding to the target platform from the mutual trust platform list.

S603: the vehicle sends a registration request message to the target platform, where the registration request message includes a security certificate issued by an area to which the vehicle belongs.

S604: after verification of an identity of the vehicle is successful, the target platform generates for the vehicle the target security certificate for travelling in the target area, and sends a registration response message including the target security certificate to the vehicle.

S603 and 5604 are mainly used to acquire the target security certificate generated by the target platform for the vehicle. It should be noted that when the vehicle acquires the target security certificate generated by the target platform for the vehicle, if the vehicle travels to the target area for the first time, it can send the registration request message to the target platform and receive the registration response message to acquire the target security certificate; if the vehicle travels to the target area again within a valid period of use, the vehicle can directly acquire the target security certificate locally (from the vehicle itself) without sending the registration request message to the target platform to request the target security certificate generated by the target platform for the vehicle, thus preventing the vehicle from interacting with the target platform again, thereby improving efficiency of acquiring the target security certificate.

S605: the vehicle downloads a trusted root certificate list of the target platform according to the target security certificate and the download address.

S606: the vehicle communicates with a communication device in the target area based on the trusted root certificate list.

It can be seen that in the embodiment of the present disclosure, since a mutual trust platform list includes a corresponding relationship between mutual trust platforms and areas, and download addresses corresponding to mutual trust platforms, when travelling to a target area, a vehicle can determine a target platform and a download address corresponding to the target platform from the mutual trust platform list, download a trusted root certificate list of the target platform based on a target security certificate and the download address generated by the target platform for the vehicle, and then communicate with the communication device in the target area based on the trusted root certificate list, thereby realizing communication between the vehicle and the communication device in the target area.

### Embodiment 6

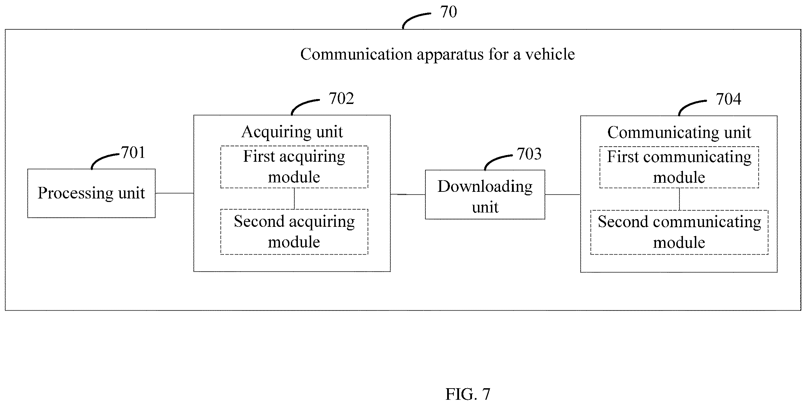

FIG. 7 is a schematic block diagram of a communication apparatus 70 for a vehicle according to a sixth embodiment of the present disclosure. Exemplarily, as shown in FIG. 7, the communication apparatus 70 for the vehicle may include:
a processing unit 701, configured to determine a target platform corresponding to a target area and a target download address corresponding to the target platform according to a corresponding relationship between mutual trust platforms and areas, and download addresses corresponding to the mutual trust platforms, when it is determined that the vehicle travels to the target area;
an acquiring unit 702, configured to acquire download verification information generated by the target platform for the vehicle;
a downloading unit 703, configured to download access verification information in the target platform according to the download verification information and the target download address; and
a communicating unit 704, configured to communicate with a communication device in the target area according to the access verification information.

Optionally, the acquiring unit 702 includes a first acquiring module and a second acquiring module;
the first acquiring module is configured to send a registration request message to the target platform, where the registration request message includes registration verification information of the vehicle;
the second acquiring module is configured to receive a registration response message sent by the target platform, where the registration response message includes the download verification information of the vehicle, and the download verification information is generated after the target platform successfully verifies an identity of the vehicle based on the registration verification information.

Optionally, the communication apparatus for the vehicle also includes a sending unit and a receiving unit;
the sending unit is configured to send a request message to a global platform, where the request message includes registration verification information of the vehicle;
the receiving unit is configured to receive a response message sent by the global platform, where the response message includes the corresponding relationship between the mutual trust platforms and the areas, and the download addresses corresponding to the mutual trust platforms, and the response message is sent after the global platform successfully verifies an identity of the vehicle based on the registration verification information.

Optionally, the response message further includes root verification information of the access verification information, and the communicating unit 704 includes a first communicating module and a second communicating module;
the first communicating module is configured to verify the access verification information based on the root verification information;
the second communicating module is configured to communicate with the communication device in the target area according to the access verification information after the verification is successful.

Optionally, the second communicating module includes a first communicating sub-module and a second communicating sub-module;
the first communicating sub-module is configured to acquire anonymous verification information from a verification management platform corresponding to the target area based on the download verification information;
the second communicating sub-module is configured to communicate with the communication device in the target area based on the anonymous verification information.

Optionally, the registration response message further includes an interface address and platform verification information of the verification management platform corresponding to the target area;
the first communicating sub-module is specifically configured to verify an identity of the verification management platform based on the platform verification information; and acquire the anonymous verification information from the verification management platform according to the interface address of the verification management platform after the verification is successful.

Optionally, the response message further includes registration service interface addresses provided by the mutual trust platforms for the vehicle;
the first acquiring module is specifically configured to send the registration request message to the target platform based on the registration service interface address provided by the target platform for the vehicle.

The communication apparatus 70 for the vehicle provided by the embodiment of the present disclosure can implement the technical solution of the communication method for the vehicle on the vehicle side shown in any of the above embodiments. Its implementation principle and beneficial effect are similar to the implementation principle and beneficial effect of the communication method for the vehicle on the vehicle side, reference can be made to the implementation principle and beneficial effect of the communication method foe the vehicle on the vehicle side, details will not be repeated here.

### Embodiment 7

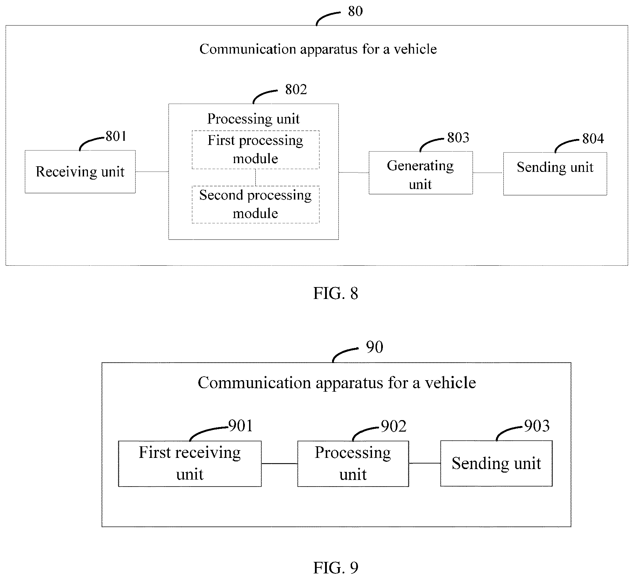

FIG. 8 is a schematic block diagram of a communication apparatus 80 for a vehicle according to a seventh embodiment of the present disclosure. Exemplarily, as shown in FIG. 8, the communication apparatus 80 for the vehicle may include:
a receiving unit 801, configured to receive a registration request message sent by the vehicle, where the registration request message includes registration verification information of the vehicle, and the registration request message is sent when the vehicle travels to a target area;
a processing unit 802, configured to verify an identity of the vehicle based on the registration verification information;
a generating unit 803, configured to generate download verification information of the vehicle after the verification is successful; and
a sending unit 804, configured to send a registration response message to the vehicle, where the registration response message includes the download verification information, the download verification information is used for the vehicle to download access verification information from a target platform corresponding to the target area based on the download verification information and communicate with a communication device in the target area based on the access verification information.

Optionally, the processing unit 802 includes a first processing module and a second processing module;
the first processing module is configured to determine whether the vehicle is a vehicle in a trust area of the target area based on the registration verification information;
the second processing module is configured to verify the identity of the vehicle if the vehicle is a vehicle in the trust area.

Optionally, the registration response message further includes an interface address and platform verification information of a verification management platform corresponding to the target area.

The vehicle communication device 80 provided by the embodiment of the present disclosure can implement the technical solution of the communication method for the vehicle on the target platform side shown in any of the above embodiments. Its implementation principle and beneficial effect are similar to the implementation principle and beneficial effect of the communication method for the vehicle on the target platform side, reference can be made to the implementation principle and beneficial effect of the vehicle communication method on the target platform side, details will not be repeated here.

### Embodiment 8

FIG. 9 is a schematic block diagram of a communication apparatus 90 for a vehicle according to an eighth embodiment of the present disclosure. Exemplarily, as shown in FIG. 9, the communication apparatus 90 for the vehicle may include:
a first receiving unit 901, configured to receive a request message sent by the vehicle, where the request message includes registration verification information of the vehicle;
a processing unit 902, configured to verify an identity of the vehicle based on the registration verification information; and
a sending unit 903, configured to send a response message to the vehicle after the verification is successful; where the response message includes a corresponding relationship between mutual trust platforms and areas, and download addresses corresponding to the mutual trust platforms, the response message is used to instruct the vehicle to download access verification information based on the corresponding relationship and the download addresses corresponding to the mutual trust platforms, and communicate with a communication device in a target area based on the access verification information.

Optionally, the communication apparatus 90 for the vehicle further includes a second receiving unit and a storage unit;
the second receiving unit is configured to receive the corresponding relationship between the mutual trust platforms and the areas, and the download addresses corresponding to the mutual trust platforms reported by the mutual trust platforms;
the storage unit is configured to store the corresponding relationship and the download address corresponding to the mutual trust platform.

The communication apparatus 90 for the vehicle provided by the embodiment of the present disclosure can implement the technical solution of the communication method for the vehicle on the global platform side shown in any of the above embodiments. Its implementation principle and beneficial effect are similar to the implementation principle and beneficial effect of the vehicle communication method on the global platform side, reference can be made to the implementation principle and beneficial effect of the vehicle communication method on the global platform side, details will not be repeated here.

The embodiment of the present disclosure also provides a communication system, including the vehicle described in any of the above embodiments, the target platform described in any of the above embodiments, and the global platform described in any of the above embodiments. Its implementation principle and beneficial effect are similar to those of the communication method for the vehicle, reference can be made to the implementation principle and beneficial effect of the vehicle communication method, and details will not be repeated here.

According to an embodiment of the present disclosure, the present disclosure also provides a computer program product, the computer program product includes a computer program storing in a readable storage medium, and at least one processor of an electronic device can read the computer program from the readable storage medium, the at least one processor executes the computer program to enable the electronic device to execute the technical solution of the communication method for the vehicle provided by any of the above embodiments. Its implementation principle and beneficial effect are similar to the implementation principle and beneficial effect of the communication method for the vehicle, reference can be made to the implementation principle and beneficial effect of the vehicle communication method and details will not be repeated here.

### Embodiment 9

According to an embodiment of the present disclosure, the present disclosure also provides an electronic device and a readable storage medium.

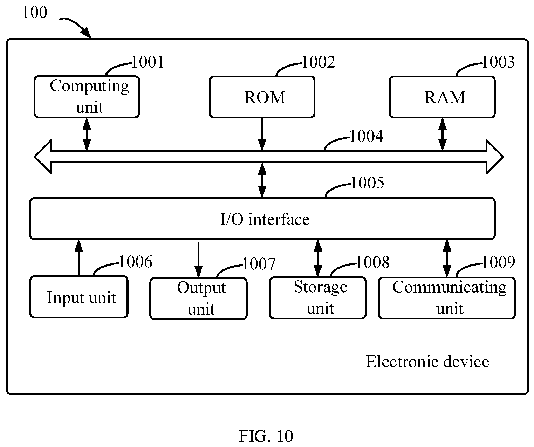

FIG. 10 is a schematic block diagram of an electronic device 100 according to a ninth embodiment of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital assistant, a cellular phones, a smart phone, a wearable device, and other similar computing devices. The components shown herein, their connections and relationships, and their functions are merely examples and are not intended to limit the implementation of the present invention insofar covered within the scope of the invention as defined by the appended claims.

As shown in FIG. 10, the electronic device 100 includes a computing unit 1001 that can perform various appropriate actions and processes according to a computer program stored in a read only memory (ROM) 1002 or a computer program loaded from a storage unit 1008 into a random access memory (RAM) 1003. In the RAM 1003, various programs and data required for the operation of the device 100 can also be stored. The computing unit 1001, the ROM 1002 and the RAM 1003 are connected to each other through a bus 1004. An input/output (I/O) interface 1005 is also connected to the bus 1004.

A number of components in the device 100 are connected to the I/O interface 1005, including: an input unit 1006, such as a keyboard, a mouse, etc.; an output unit 1007, such as various types of displays, speakers, etc.; the storage unit 1008, such as a magnetic disk, an optical disc, etc.; and a communicating unit 1009, such as a network card, a modem, a wireless communication transceiver, etc. The communicating unit 1009 allows the device 100 to exchange information/data with other devices through a computer network such as the Internet and/or various telecommunication networks.

The computing unit 1001 may be various general-purpose and/or special-purpose processing components with processing and computing capabilities. Some examples of the computing unit 1001 include, but are not limited to, a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, etc. The calculation unit 1001 performs various methods and processes described above, such as a communication method for a vehicle. For example, in some embodiments, the communication method for the vehicle may be implemented as a computer software program tangibly contained in a machine-readable medium, such as the storage unit 1008. In some embodiments, part or all of the computer program may be loaded and/or installed on the device 100 via the ROM 1002 and/or the communicating unit 1009. When the computer program is loaded into the RAM 1003 and executed by the computing unit 1001, one or more steps of the communication method for the vehicle described above may be executed. Alternatively, in other embodiments, the computing unit 1001 may be configured to execute the communication method for the vehicle by any other suitable means (for example, by means of firmware).

Various embodiments of the systems and technologies described above herein can be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software and/or a combination thereof. These various embodiments may include: being implemented in one or more computer programs, the one or more computer programs may be executed and/or interpreted on a programmable system including at least one programmable processor, and the programmable processor may be a special-purpose or general-purpose programmable processor, which can receive data and instructions from a storage system, at least one input apparatus and at least one output apparatus, and transmit data and instructions to the storage system, the at least one input apparatus, and the at least one output apparatus.

The program code for implementing the methods of the present disclosure may be written in any combination of one or more programming languages. These program codes can be provided to the processor or controller of a general-purpose computer, a special-purpose computer or other programmable data processing apparatus, so that when the program code is executed by the processor or controller, the functions/operations specified in the flowchart and/or block diagram are implemented. The program code can be executed completely on the machine, partially on the machine, partially on the machine and partially on the remote machine as a separate software package, or completely on the remote machine or server.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, electronic, magnetic, optical, electromagnetic, infrared, or semiconductor system, apparatus or device, or any suitable combination of the above. More specific examples of the machine-readable storage medium would include electrical connections based on one or more lines, a portable computer disk, hard disks, a random access memory (RAM), a read only memory (ROM), an erasable programmable read only memory (EPROM or flash memory), an optical fiber, a portable compact disk read only memory (CD-ROM), an optical storage device, a magnetic storage device or any suitable combination of the above.

In order to provide interaction with the user, the system and technology described herein may be implemented on a computer with: a display apparatus for displaying information to the user (for example., a CRT (cathode ray tube) or an LCD (liquid crystal display) monitor); and a keyboard and pointing apparatus (for example, a mouse or a trackball), the user can provide input to the computer through the keyboard and the pointing apparatus. Other kinds of apparatus can also be used to provide interaction with the user; for example, the feedback provided to the user may be any form of sensory feedback (for example, visual feedback, auditory feedback, or tactile feedback); and the input from the user can be received in any form (including acoustic input, voice input or tactile input).

The system and technology described herein may be implemented in a computing system including background components (for example, as a data server), or a computing system including middleware components (for example, an application server), or a computing system including front-end components (for example, a user computer having a graphical user interface or a web browser, the user can interact with implementations of the system and technology described herein through a graphical user interface or the web browse), or in a computing system including any combination of such background components, middleware components, or front-end components. The components of the system can be connected to each other through digital data communication (for example, a communication network) in any form or medium. Examples of the communication network include: a local area network (LAN), a wide area network (WAN), and the Internet.

The computer system may include a client and a server. The client and the server are generally far away from each other and usually interact through a communication network. The relationship between the client and the server is generated by a computer program running on the corresponding computer and having a client-server relationship with each other. The server may be a cloud server, also known as a cloud computing server or a cloud host. It is a host product in a cloud computing service system to solve the shortcomings of difficult management and weak business scalability in traditional physical hosts and VPS services ("Virtual Private Server", or "VPS" for short). The server may also be a server of a distributed system or a server combined with blockchain.

The above specific embodiments do not constitute a limitation on the protection scope of the present invention, which is defined by the appended claims.

Those skilled in the art should understand that various modifications, combinations, sub-combinations and substitutions can be made according to design requirements and other factors insofar encompassed within the scope of the invention as defined by the appended claims.

## Claims

1. A communication method for a vehicle, wherein the method is applied in the vehicle, and the method comprises:
when it is determined that the vehicle travels to a target area, determining (S201) a target platform corresponding to the target area and a target download address of access verification information corresponding to the target platform according to a corresponding relationship between mutual trust platforms and areas, and download addresses of access verification information corresponding to the mutual trust platforms, wherein the corresponding relationship between the mutual trust platforms and the areas, and the download addresses of the access verification information corresponding to the mutual trust platforms are acquired from a global platform, and the global platform is used to maintain the corresponding relationship between the mutual trust platforms and the areas, and the download addresses of the access verification information corresponding to the mutual trust platforms;
acquiring (S202) download verification information generated by the target platform for the vehicle;
downloading (S203) access verification information in the target platform according to the download verification information and the target download address; and
communicating (S204) with a communication device in the target area according to the access verification information.

2. The method according to claim 1, wherein acquiring (S202) the download verification information generated by the target platform for the vehicle comprises:
sending a registration request message to the target platform, wherein the registration request message comprises registration verification information of the vehicle; and
receiving a registration response message sent by the target platform, wherein the registration response message comprises the download verification information of the vehicle, and the download verification information is generated after the target platform successfully verifies an identity of the vehicle based on the registration verification information.

3. The method according to claim 2, further comprising:
sending (S301) a request message to the global platform, wherein the request message comprises registration verification information of the vehicle; and
receiving (S302) a response message sent by the global platform, wherein the response message comprises the corresponding relationship between the mutual trust platforms and the areas, and the download addresses of the access verification information corresponding to the mutual trust platforms, and the response message is sent after the global platform successfully verifies an identity of the vehicle based on the registration verification information.

4. The method according to claim 3, wherein the response message further comprises root verification information of the access verification information;
wherein communicating (S204) with the communication device in the target area according to the access verification information comprises:
verifying the access verification information based on the root verification information; and
communicating with the communication device in the target area according to the access verification information after the verification is successful.

5. The method according to any one of claims 2-4, wherein communicating (S204) with the communication device in the target area comprises:
acquiring anonymous verification information from a verification management platform corresponding to the target area based on the download verification information; and
communicating with the communication device in the target area based on the anonymous verification information.

6. The method according to claim 5, wherein a registration response message further comprises an interface address and platform verification information of the verification management platform corresponding to the target area;
wherein acquiring the anonymous verification information from the verification management platform corresponding to the target area comprises:
verifying an identity of the verification management platform based on the platform verification information; and
acquiring the anonymous verification information from the verification management platform according to the interface address of the verification management platform after the verification is successful.

7. The method according to claim 2, wherein the registration response message further comprises registration service interface addresses provided by the mutual trust platforms for the vehicle;
wherein sending the registration request message to the target platform comprises:
sending the registration request message to the target platform based on a registration service interface address provided by the target platform for the vehicle.

8. A communication method for a vehicle, wherein the method is applied in a target platform corresponding to a target area where the vehicle travels to, and the method comprises:
receiving (S401) a registration request message sent by the vehicle, wherein the registration request message comprises registration verification information of the vehicle, and the registration request message is sent when the vehicle travels to the target area;
verifying (S402) an identity of the vehicle based on the registration verification information;
generating (S403) download verification information of the vehicle after the verification is successful; and
sending (S404) a registration response message to the vehicle, wherein the registration response message comprises the download verification information, the download verification information is used for the vehicle to download access verification information from the target platform corresponding to the target area based on the download verification information and a target download address of access verification information corresponding to the target platform, and communicate with a communication device in the target area based on the access verification information, wherein the target platform and the target download address are determined by the vehicle according to a corresponding relationship between mutual trust platforms and areas and download addresses of access verification information corresponding to the mutual trust platforms, the corresponding relationship between the mutual trust platforms and the areas and the download addresses of the access verification information corresponding to the mutual trust platforms are acquired by the vehicle from a global platform, and the global platform is used to maintain the corresponding relationship between the mutual trust platforms and the areas, and the download addresses of the access verification information corresponding to the mutual trust platforms.

9. The method according to claim 8, wherein verifying (S402) the identity of the vehicle based on the registration verification information comprises:
determining whether the vehicle is a vehicle in a trust area of the target area based on the registration verification information; and
verifying the identity of the vehicle if the vehicle is a vehicle in the trust area.

10. The method according to claim 8 or 9, wherein the registration response message further comprises an interface address and platform verification information of a verification management platform corresponding to the target area.

11. A communication method for a vehicle, wherein the method is applied in a global platform, and the method comprises:
receiving (S501) a request message sent by the vehicle, wherein the request message comprises registration verification information of the vehicle;
verifying (S502) an identity of the vehicle based on the registration verification information; and
sending (S503) a response message to the vehicle after the verification is successful, wherein the response message comprises a corresponding relationship between mutual trust platforms and areas, and download addresses of access verification information corresponding to the mutual trust platforms, the response message is used to instruct the vehicle to download access verification information based on the corresponding relationship and the download addresses of the access verification information corresponding to the mutual trust platforms, and communicate with a communication device in a target area based on the access verification information, wherein the access verification information is downloaded by the vehicle from a target platform according to download verification information generated by the target platform and a target download address of access verification information corresponding to the target platform comprised in the response message.

12. The method according to claim 11, further comprising:
receiving the corresponding relationship between the mutual trust platforms and the areas, and the download addresses of the access verification information corresponding to the mutual trust platforms reported by the mutual trust platforms; and
storing the corresponding relationship and the download addresses of the access verification information corresponding to the mutual trust platform.

13. A communication apparatus for a target platform (80), comprising: a receiving unit (801), a processing unit (802), a generating unit (803), and a sending unit (804), and the units are configured to implement the method according to any one of claims 8-10.

14. A communication apparatus for a global platform (90), comprising: a first receiving unit (901), a processing unit (902), and a sending unit (903), and the units are configured to implement the method according to claim 11 or 12.

## Patentansprüche

1. Kommunikationsverfahren für ein Fahrzeug, wobei das Verfahren im Fahrzeug angewendet wird und das Verfahren Folgendes umfasst:
wenn bestimmt wird, dass das Fahrzeug zu einem Zielgebiet fährt, Bestimmen (S201) einer Zielplattform, die dem Zielgebiet entspricht, und einer Ziel-Download-Adresse für Zugriffsverifizierungsinformationen, die der Zielplattform entspricht, gemäß einer Entsprechungsbeziehung zwischen sich gegenseitig vertrauenden Plattformen und Gebieten, und Download-Adressen für Zugriffsverifizierungsinformationen, die den sich gegenseitig vertrauenden Plattformen entsprechen, wobei die Entsprechungsbeziehung zwischen den sich gegenseitig vertrauenden Plattformen und den Gebieten und die Download-Adressen für die Zugriffsverifizierungsinformationen, die den sich gegenseitig vertrauenden Plattformen entsprechen, von einer globalen Plattform erfasst werden, und die globale Plattform verwendet wird, um die Entsprechungsbeziehung zwischen den sich gegenseitig vertrauenden Plattformen und den Gebieten und die Download-Adressen für die Zugriffsverifizierungsinformationen, die den sich gegenseitig vertrauenden Plattformen entsprechen, aufrechtzuerhalten;
Erfassen (S202) von Download-Verifizierungsinformationen, die von der Zielplattform für das Fahrzeug erzeugt werden;
Herunterladen (S203) von Zugriffsverifizierungsinformationen auf der Zielplattform gemäß den Download-Verifizierungsinformationen und der Ziel-Download-Adresse; und
Kommunizieren (S204) mit einer Kommunikationsvorrichtung im Zielgebiet gemäß den Zugriffsverifizierungsinformationen.

2. Verfahren nach Anspruch 1, wobei das Erfassen (S202) der Download-Verifizierungsinformationen, die von der Zielplattform für das Fahrzeug erzeugt werden, Folgendes umfasst:
Senden einer Registrierungsanforderungsnachricht an die Zielplattform, wobei die Registrierungsanforderungsnachricht Registrierungsverifizierungsinformationen des Fahrzeugs umfasst; und
Empfangen einer Registrierungsantwortnachricht, die von der Zielplattform gesendet wird, wobei die Registrierungsantwortnachricht die Download-Verifizierungsinformationen des Fahrzeugs umfasst und die Download-Verifizierungsinformationen erzeugt werden, nachdem die Zielplattform eine Identität des Fahrzeugs auf Grundlage der Registrierungsverifizierungsinformationen erfolgreich verifiziert hat.

3. Verfahren nach Anspruch 2, weiter umfassend:
Senden (S301) einer Anforderungsnachricht an die globale Plattform, wobei die Anforderungsnachricht Registrierungsverifizierungsinformationen des Fahrzeugs umfasst; und
Empfangen (S302) einer Antwortnachricht, die von der globalen Plattform gesendet wird, wobei die Antwortnachricht die Entsprechungsbeziehung zwischen den sich gegenseitig vertrauenden Plattformen und den Gebieten und die Download-Adressen für die Zugriffsverifizierungsinformationen, die den sich gegenseitig vertrauenden Plattformen entsprechen, umfasst und die Antwortnachricht gesendet wird, nachdem die globale Plattform eine Identität des Fahrzeugs auf Grundlage der Registrierungsverifizierungsinformationen erfolgreich verifiziert hat.

4. Verfahren nach Anspruch 3, wobei die Antwortnachricht weiter Root-Verifizierungsinformationen der Zugriffsverifizierungsinformationen umfasst;
wobei das Kommunizieren (S204) mit der Kommunikationsvorrichtung im Zielgebiet gemäß den Zugriffsverifizierungsinformationen Folgendes umfasst:
Verifizieren der Zugriffsverifizierungsinformationen auf Grundlage der Root-Verifizierungsinformationen; und
Kommunizieren mit der Kommunikationsvorrichtung im Zielgebiet gemäß den Zugriffsverifizierungsinformationen, nachdem die Verifizierung erfolgreich war.

5. Verfahren nach einem der Ansprüche 2-4, wobei das Kommunizieren (S204) mit der Kommunikationsvorrichtung im Zielgebiet Folgendes umfasst:
Erfassen anonymer Verifizierungsinformationen von einer Verifizierungsverwaltungsplattform, die dem Zielgebiet entspricht, auf Grundlage der Download-Verifizierungsinformationen; und
Kommunizieren mit der Kommunikationsvorrichtung im Zielgebiet auf Grundlage der anonymen Verifizierungsinformationen.

6. Verfahren nach Anspruch 5, wobei eine Registrierungsantwortnachricht weiter eine Schnittstellenadresse und Plattformverifizierungsinformationen der Verifizierungsverwaltungsplattform, die dem Zielgebiet entspricht, umfasst;
wobei das Erfassen der anonymen Verifizierungsinformationen von der Verifizierungsverwaltungsplattform, die dem Zielgebiet entspricht, Folgendes umfasst:
Verifizieren einer Identität der Verifizierungsverwaltungsplattform auf Grundlage der Plattformverifizierungsinformationen; und
Erfassen der anonymen Verifizierungsinformationen von der Verifizierungsverwaltungsplattform gemäß der Schnittstellenadresse der Verifizierungsverwaltungsplattform, nachdem die Verifizierung erfolgreich war.

7. Verfahren nach Anspruch 2, wobei die Registrierungsantwortnachricht weiter Registrierungsdienst-Schnittstellenadressen umfasst, die von den sich gegenseitig vertrauenden Plattformen für das Fahrzeug bereitgestellt werden;
wobei das Senden der Registrierungsanforderungsnachricht an die Zielplattform Folgendes umfasst:
Senden der Registrierungsanforderungsnachricht an die Zielplattform auf Grundlage einer Registrierungsdienst-Schnittstellenadresse, die von der Zielplattform für das Fahrzeug bereitgestellt wird.

8. Kommunikationsverfahren für ein Fahrzeug, wobei das Verfahren auf einer Zielplattform angewendet wird, die einem Zielgebiet entspricht, zu dem das Fahrzeug fährt, und das Verfahren Folgendes umfasst:
Empfangen (S401) einer Registrierungsanforderungsnachricht, die von dem Fahrzeug gesendet wird, wobei die Registrierungsanforderungsnachricht Registrierungsverifizierungsinformationen des Fahrzeugs umfasst und die Registrierungsanforderungsnachricht gesendet wird, wenn das Fahrzeug zum Zielgebiet fährt;
Verifizieren (S402) einer Identität des Fahrzeugs auf Grundlage der Registrierungsverifizierungsinformationen;
Erzeugen (S403) von Download-Verifizierungsinformationen des Fahrzeugs, nachdem die Verifizierung erfolgreich war; und
Senden (S404) einer Registrierungsantwortnachricht an das Fahrzeug, wobei die Registrierungsantwortnachricht die Download-Verifizierungsinformationen umfasst, die Download-Verifizierungsinformationen für das Fahrzeug verwendet werden, um auf Grundlage der Download-Verifizierungsinformationen und einer Ziel-Download-Adresse für Zugriffsverifizierungsinformationen, die der Zielplattform entspricht, Zugriffsverifizierungsinformationen von der Zielplattform, die dem Zielgebiet entspricht, herunterzuladen und auf Grundlage der Zugriffsverifizierungsinformationen mit einer Kommunikationsvorrichtung im Zielgebiet zu kommunizieren, wobei die Zielplattform und die Ziel-Download-Adresse vom Fahrzeug gemäß einer Entsprechungsbeziehung zwischen sich gegenseitig vertrauenden Plattformen und Gebieten und Download-Adressen für Zugriffsverifizierungsinformationen, die den sich gegenseitig vertrauenden Plattformen entsprechen, bestimmt wird, die Entsprechungsbeziehung zwischen den sich gegenseitig vertrauenden Plattformen und den Gebieten und die Download-Adressen für die Zugriffsverifizierungsinformationen, die den sich gegenseitig vertrauenden Plattformen entsprechen, vom Fahrzeug von einer globalen Plattform erfasst werden, und die globale Plattform verwendet wird, um die Entsprechungsbeziehung zwischen den sich gegenseitig vertrauenden Plattformen und den Gebieten und die Download-Adressen für die Zugriffsverifizierungsinformationen, die den sich gegenseitig vertrauenden Plattformen entsprechen, aufrechtzuerhalten.

9. Verfahren nach Anspruch 8, wobei das Verifizieren (S402) der Identität des Fahrzeugs auf Grundlage der Registrierungsverifizierungsinformationen umfasst:
Bestimmen, ob es sich bei dem Fahrzeug um ein Fahrzeug in einem Vertrauensgebiet des Zielgebiets handelt, auf Grundlage der Registrierungsverifizierungsinformationen; und
Verifizieren der Identität des Fahrzeugs, wenn es sich bei dem Fahrzeug um ein Fahrzeug im Vertrauensgebiet handelt.

10. Verfahren nach Anspruch 8 oder 9, wobei die Registrierungsantwortnachricht weiter eine Schnittstellenadresse und Plattformverifizierungsinformationen einer Verifizierungsverwaltungsplattform umfasst, die dem Zielgebiet entspricht.

11. Kommunikationsverfahren für ein Fahrzeug, wobei das Verfahren auf einer globalen Plattform angewendet wird und das Verfahren Folgendes umfasst:
Empfangen (S501) einer Anforderungsnachricht, die vom Fahrzeug gesendet wird, wobei die Anforderungsnachricht Registrierungsverifizierungsinformationen des Fahrzeugs umfasst;
Verifizieren (S502) einer Identität des Fahrzeugs auf Grundlage der Registrierungsverifizierungsinformationen; und
Senden (S503) einer Antwortnachricht an das Fahrzeug, nachdem die Verifizierung erfolgreich war, wobei die Antwortnachricht eine Entsprechungsbeziehung zwischen sich gegenseitig vertrauenden Plattformen und Gebieten und Download-Adressen für Zugriffsverifizierungsinformationen umfasst, die den sich gegenseitig vertrauenden Plattformen entsprechen, die Antwortnachricht verwendet wird, um das Fahrzeug anzuweisen, Zugriffsverifizierungsinformationen auf Grundlage der Entsprechungsbeziehung und der Download-Adressen der Zugriffsverifizierungsinformationen, die den sich gegenseitig vertrauenden Plattformen entsprechen, herunterzuladen und auf Grundlage der Zugriffsverifizierungsinformationen mit einer Kommunikationsvorrichtung in einem Zielgebiet zu kommunizieren, wobei die Zugriffsverifizierungsinformationen vom Fahrzeug gemäß Download-Verifizierungsinformationen, die von der Zielplattform erzeugt werden, und einer Ziel-Download-Adresse für Zugriffsverifizierungsinformationen, die der in der Antwortnachricht umfassten Zielplattform entspricht, von einer Zielplattform heruntergeladen werden.

12. Verfahren nach Anspruch 11, weiter umfassend:
Empfangen der Entsprechungsbeziehung zwischen den sich gegenseitig vertrauenden Plattformen und den Gebieten und der Download-Adressen für die Zugriffsverifizierungsinformationen, die den sich gegenseitig vertrauenden Plattformen entsprechen, welche von den sich gegenseitig vertrauenden Plattformen gemeldet wird; und
Speichern der Entsprechungsbeziehung und der Download-Adressen für die Zugriffsverifizierungsinformationen, die der sich gegenseitig vertrauenden Plattform entsprechen.

13. Kommunikationseinrichtung für eine Zielplattform (80), umfassend: eine Empfangseinheit (801), eine Verarbeitungseinheit (802), eine Erzeugungseinheit (803) und eine Sendeeinheit (804), und wobei die Einheiten so konfiguriert sind, dass sie das Verfahren nach einem der Ansprüche 8-10 implementieren.

14. Kommunikationseinrichtung für eine globale Plattform (90), umfassend: eine erste Empfangseinheit (901), eine Verarbeitungseinheit (902) und eine Sendeeinheit (903), und wobei die Einheiten so konfiguriert sind, dass sie das Verfahren nach Anspruch 11 oder 12 implementieren.

## Revendications

1. Procédé de communication pour un véhicule, dans lequel le procédé est appliqué dans le véhicule, et le procédé comprend :
lorsqu'il est déterminé que le véhicule se déplace vers une zone cible, la détermination (S201) d'une plateforme cible correspondant à la zone cible et d'une adresse de téléchargement cible d'informations de vérification d'accès correspondant à la plateforme cible selon une relation de correspondance entre des plateformes de confiance mutuelle et des zones, et d'adresses de téléchargement d'informations de vérification d'accès correspondant aux plateformes de confiance mutuelle, dans lequel la relation de correspondance entre les plateformes de confiance mutuelle et les zones, et les adresses de téléchargement des informations de vérification d'accès correspondant aux plateformes de confiance mutuelle sont acquises à partir d'une plateforme globale, et la plateforme globale est utilisée pour maintenir la relation de correspondance entre les plateformes de confiance mutuelle et les zones, et les adresses de téléchargement des informations de vérification d'accès correspondant aux plateformes de confiance mutuelle ;
l'acquisition (S202) d'informations de vérification de téléchargement générées par la plateforme cible pour le véhicule ;
le téléchargement (S203) d'informations de vérification d'accès dans la plateforme cible en fonction des informations de vérification de téléchargement et de l'adresse de téléchargement cible ; et
la communication (S204) avec un dispositif de communication dans la zone cible selon les informations de vérification d'accès.

2. Procédé selon la revendication 1, dans lequel l'acquisition (S202) des informations de vérification de téléchargement générées par la plateforme cible pour le véhicule comprend :
l'envoi d'un message de demande d'immatriculation à la plateforme cible, dans lequel le message de demande d'immatriculation comprend des informations de vérification d'immatriculation du véhicule ; et
la réception d'un message de réponse d'immatriculation envoyé par la plateforme cible, dans lequel le message de réponse d'immatriculation comprend les informations de vérification de téléchargement du véhicule, et les informations de vérification de téléchargement sont générées une fois que la plateforme cible parvient à vérifier une identité du véhicule sur la base des informations de vérification d'immatriculation.

3. Procédé selon la revendication 2, comprenant en outre :
l'envoi (S301) d'un message de demande à la plateforme globale, dans lequel le message de demande comprend des informations de vérification d'immatriculation du véhicule ; et
la réception (S302) d'un message de réponse envoyé par la plateforme globale, dans lequel le message de réponse comprend la relation correspondante entre les plateformes de confiance mutuelle et les zones, et les adresses de téléchargement des informations de vérification d'accès correspondant aux plateformes de confiance mutuelle, et le message de réponse est envoyé une fois que la plateforme globale parvient à vérifier une identité du véhicule sur la base des informations de vérification d'immatriculation.

4. Procédé selon la revendication 3, dans lequel le message de réponse comprend en outre des informations de vérification racine des informations de vérification d'accès ;
dans lequel la communication (S204) avec le dispositif de communication dans la zone cible selon les informations de vérification d'accès comprend :
la vérification des informations de vérification d'accès sur la base des informations de vérification racine ; et
la communication avec le dispositif de communication dans la zone cible selon les informations de vérification d'accès une fois la vérification réussie.

5. Procédé selon l'une quelconque des revendications 2-4, dans lequel la communication (S204) avec le dispositif de communication dans la zone cible comprend :
l'acquisition d'informations de vérification anonymes à partir d'une plateforme de gestion de vérification correspondant à la zone cible sur la base des informations de vérification téléchargées ; et
la communication avec le dispositif de communication dans la zone cible sur la base des informations de vérification anonymes.

6. Procédé selon la revendication 5, dans lequel un message de réponse d'immatriculation comprend en outre une adresse d'interface et des informations de vérification de plateforme de la plateforme de gestion de vérification correspondant à la zone cible ;
dans lequel l'acquisition des informations de vérification anonymes à partir de la plateforme de gestion de vérification correspondant à la zone cible comprend :
la vérification d'une identité de la plateforme de gestion de vérification sur la base des informations de vérification de plateforme ; et
l'acquisition des informations de vérification anonymes auprès de la plateforme de gestion de vérification en fonction de l'adresse d'interface de la plateforme de gestion de vérification une fois la vérification réussie.

7. Procédé selon la revendication 2, dans lequel le message de réponse d'immatriculation comprend en outre des adresses d'interface de service d'immatriculation fournies par les plateformes de confiance mutuelle pour le véhicule ;
dans lequel l'envoi du message de demande d'immatriculation à la plateforme cible comprend :
l'envoi du message de demande d'immatriculation à la plateforme cible sur la base d'une adresse d'interface de service d'immatriculation fournie par la plateforme cible pour le véhicule.

8. Procédé de communication pour un véhicule, dans lequel le procédé est appliqué dans une plateforme cible correspondant à une zone cible vers laquelle le véhicule se déplace, et le procédé comprend :
la réception (S401) d'un message de demande d'immatriculation envoyé par le véhicule, dans lequel le message de demande d'immatriculation comprend des informations de vérification d'immatriculation du véhicule, et le message de demande d'immatriculation est envoyé lorsque le véhicule se déplace vers la zone cible ;
la vérification (S402) d'une identité du véhicule sur la base des informations de vérification d'immatriculation ;
la génération (S403) d'informations de vérification de téléchargement du véhicule une fois la vérification réussie ; et
l'envoi (S404) d'un message de réponse d'immatriculation au véhicule, dans lequel le message de réponse d'immatriculation comprend les informations de vérification de téléchargement, les informations de vérification de téléchargement sont utilisées pour que le véhicule télécharge des informations de vérification d'accès à partir de la plateforme cible correspondant à la zone cible sur la base des informations de vérification de téléchargement et d'une adresse de téléchargement cible d'informations de vérification d'accès correspondant à la plateforme cible, et communique avec un dispositif de communication dans la zone cible sur la base des informations de vérification d'accès, dans lequel la plateforme cible et l'adresse de téléchargement cible sont déterminées par le véhicule selon une relation de correspondance entre des plateformes de confiance mutuelle et des zones et des adresses de téléchargement des informations de vérification d'accès correspondant aux plateformes de confiance mutuelle, la relation de correspondance entre les plateformes de confiance mutuelle et les zones et les adresses de téléchargement des informations de vérification d'accès correspondant aux plateformes de confiance mutuelle sont acquises par le véhicule à partir d'une plateforme globale, et la plateforme globale est utilisée pour maintenir la relation de correspondance entre les plateformes de confiance mutuelle et les zones, et les adresses de téléchargement des informations de vérification d'accès correspondant aux plateformes de confiance mutuelle.

9. Procédé selon la revendication 8, dans lequel la vérification (S402) de l'identité du véhicule sur la base des informations de vérification d'immatriculation comprend :
la détermination de si le véhicule est un véhicule dans une zone de confiance de la zone cible sur la base des informations de vérification d'immatriculation ; et
la vérification de l'identité du véhicule si le véhicule est un véhicule dans la zone de confiance.

10. Procédé selon la revendication 8 ou 9, dans lequel le message de réponse d'immatriculation comprend en outre une adresse d'interface et des informations de vérification de plateforme d'une plateforme de gestion de vérification correspondant à la zone cible.

11. Procédé de communication pour un véhicule, dans lequel le procédé est appliqué dans une plateforme globale, et le procédé comprend :
la réception (S501) d'un message de demande envoyé par le véhicule, dans lequel le message de demande comprend des informations de vérification d'immatriculation du véhicule ;
la vérification (S502) d'une identité du véhicule sur la base des informations de vérification d'immatriculation ; et
l'envoi (S503) d'un message de réponse au véhicule une fois la vérification réussie, dans lequel le message de réponse comprend une relation de correspondance entre des plateformes de confiance mutuelle et des zones, et des adresses de téléchargement d'informations de vérification d'accès correspondant aux plateformes de confiance mutuelle, le message de réponse étant utilisé pour ordonner au véhicule de télécharger des informations de vérification d'accès sur la base de la relation de correspondance et des adresses de téléchargement des informations de vérification d'accès correspondant aux plateformes de confiance mutuelle, et communiquer avec un dispositif de communication dans une zone cible sur la base des informations de vérification d'accès, dans lequel les informations de vérification d'accès sont téléchargées par le véhicule à partir d'une plateforme cible en fonction d'informations de vérification de téléchargement générées par la plateforme cible et d'une adresse de téléchargement cible d'informations de vérification d'accès correspondant à la plateforme cible comprise dans le message de réponse.

12. Procédé selon la revendication 11, comprenant en outre :
la réception de la relation de correspondance entre les plateformes de confiance mutuelle et les zones, et les adresses de téléchargement des informations de vérification d'accès correspondant aux plateformes de confiance mutuelle signalées par les plateformes de confiance mutuelle ; et
le stockage de la relation de correspondance et des adresses de téléchargement des informations de vérification d'accès correspondant à la plateforme de confiance mutuelle.

13. Appareil de communication pour une plateforme cible (80), comprenant : une unité de réception (801), une unité de traitement (802), une unité de génération (803) et une unité d'envoi (804), et les unités sont configurées pour mettre en oeuvre le procédé selon l'une quelconque des revendications 8-10.

14. Appareil de communication pour une plateforme globale (90), comprenant : une première unité de réception (901), une unité de traitement (902) et une unité d'envoi (903), et les unités sont configurées pour mettre en oeuvre le procédé selon la revendication 11 ou 12.
